# EUROPÄISCHE PATENTSCHRIFT

(11) **EP 3 083 175 B1**
(45) Veröffentlichungstag und Bekanntmachung des Hinweises auf die Patenterteilung: **14.11.2018**
(21) Anmeldenummer: 14806238.3
(22) Anmeldetag: 01.12.2014
(51) Int. Cl.: B29B 17/02, D21D 1/30, B02C 7/12, B29B 17/04, B29L 7/00, B29K 67/00

(54) **VORRICHTUNG ZUM ENTFERNEN VON VERUNREINIGUNGEN AUF KUNSTSTOFFSCHNIPSELN**
APPARATUS FOR REMOVING IMPURITIES FROM SHREDS OF PLASTIC
DISPOSITIF D'ÉLIMINATION DE MATIÈRES INDÉSIRABLES SUR DES ROGNURES DE MATÉRIAU SYNTHÉTIQUE

(30) Priorität: 20.12.2013 DE 102013114699
(43) Veröffentlichungstag der Anmeldung: 26.10.2016
(73) Patentinhaber: CVP Clean Value Plastics GmbH, 20099 Hamburg (DE)
(72) Erfinder: HOFMANN, Michael, 20146 Hamburg (DE); GERCKE, Alexander, 23843 Bad Oldesloe (DE)
(74) Vertreter: Hauck Patentanwaltspartnerschaft mbB
(86) Internationale Anmeldenummer: PCT/EP2014/076104
(87) Internationale Veröffentlichungsnummer: WO 2015/090919

(56) Entgegenhaltungen:
- EP-A1- 1 670 591
- WO-A1-00/56459
- WO-A1-2004/103567
- WO-A2-2013/010654
- US-A1- 2011 155 828

## Beschreibung

Die Erfindung betrifft eine Vorrichtung zum Entfernen von Verunreinigungen auf Kunststoffschnipseln, umfassend eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, weiter umfassend eine Antriebseinrichtung, mit der zumindest eine der Reinigungsscheiben um ihre Rotationsachse drehbar ist und eine Zuführeinrichtung, mit der Kunststoffschnipsel zwischen die Reinigungsscheiben zuführbar sind.

Kunststoffabfälle, beispielsweise PET-Getränkeflaschen, Blisterverpackungen aus PET (tiefgezogene PET-Folien), Kunststoffabfälle aus Polyolefinen oder ähnliches, müssen im Zuge eines Recyclings gereinigt werden. Dabei sind sehr hohe Qualitätsanforderungen zu erfüllen. Zulässige Verunreinigungen bewegen sich im ppm Bereich. Für die Reinigung werden die Kunststoffabfälle zunächst zu Kunststoffschnipseln, insbesondere sogenannten Kunststoffflakes, zerkleinert. Voraussetzung für den Reinigungsprozess und die kontinuierliche Beschickung einer Reinigungsanlage sind optimal vorzerkleinerte Kunststoffschnipsel. Insbesondere sollten die Kunststoffschnipsel möglichst gleichmäßig mit einem geringen Feinanteil erzeugt werden. Es ist bekannt, hierfür einen Schredder oder Schneidmühlen (Rotor mit Messern und Gegenmessern und Siebkorb) einzusetzen. Über den Lochdurchmesser in dem Siebkorb wird die erzeugte Flakegröße beeinflusst. Die Abtrennung von Metallen von den Kunststoffabfällen erfolgt in einer Vorsortierung mittels Magnet- und Wirbelstromabscheidern. Es ist Stand der Technik, dass vor der Zerkleinerung der Kunststoffabfälle eine Sortierung nach Farben und/oder Kunststoffarten erfolgt. Dies ist aufgrund der Verschmutzung der Kunststoffabfälle jedoch mit Einschränkungen verbunden, da die Erkennungsrate bei verschmutzen Stoffen geringer als bei sauberen ist. Weiterhin müssen bei einer Sortierung vor der Reinigung dann mehrere Waschstraßen betrieben werden, um die einzelnen Fraktionen zu reinigen. Es ist jedoch auch möglich, zunächst Kunststoffabfälle unterschiedlicher Farben und/oder unterschiedlicher Kunststoffarten vorzuzerkleinern, anschließend zu reinigen und die Sortierung nach Farben und/oder Kunststoffarten erst am Ende des Prozesses mittels einer Farberkennung bzw. einer NIR, Laser, oder Röntgenspektroskopie durchzuführen. Dies kann in einem Auflichtprozess und/oder einem Durchlichtprozess mit geeigneter optischer Detektoreinrichtung (Kamera) erfolgen.

Beim Recycling von Kunststoffflakes, beispielsweise PET-Flakes oder Polyethylen- bzw. Polypropylen-Flakes, müssen folgende Anforderungen erfüllt werden:
1. Abtrennen von Folien- und Zellstoffetiketten
2. Abtrennen der Zellstoffe
3. Reinigung der Flakes von Verschmutzungen durch Inhaltsstoffe (beispielsweise Getränkereste)
4. Reinigung der Flakes von anhaftenden Verschmutzungen (beispielsweise Klebstoffe von Etiketten)
5. Abtrennen von Metallen (beispielsweise Weißblech und Aluminiumdosen)
6. Abtrennen von Fremdkunststoffen
7. Sortieren nach Farben (z.B. PET-klar und PET-bunt).

Ähnliche Anforderungen (allerdings mit höheren Grenzwerten) gelten für das werkstoffliche Recycling von anderen Kunststoffen, z.B. nicht-transparanten durchgefärbten Kunststoffen. Allerdings entfällt im Regelfall die Sortierung nach Farben.

Aus WO 2013/010654 A3 ist eine gattungsgemäße Vorrichtung zum Entfernen von Verunreinigungen auf Kunststoffschnipseln bekannt. Bei der bekannten Vorrichtung sind auf den Reinigungsflächen der Reinigungsscheiben jeweils eine Mehrzahl von Reinigungsrippen vorgesehen, wobei zumindest eine Flanke der Reinigungsrippen gegenüber der Axialrichtung der jeweiligen Reinigungsscheibe geneigt oder gekrümmt ist, und wobei zwischen zumindest einigen zueinander benachbarten Reinigungsrippen mehrere Reinigungsstege angeordnet sind. In vielen Anwendungsfällen wird mit dieser Vorrichtung ein hervorragendes Reinigungsergebnis erzielt. In einigen Anwendungsfällen, insbesondere bei besonders hartnäckigen und/oder den einzelnen Kunststoffschnipsel vollständig bedeckenden Verunreinigungen, verursacht zum Beispiel durch zähelastische Hotmelt-Klebstoffe, besteht allerdings ein Bedarf, die Reinigungswirkung weiter zu erhöhen. Gleichzeitig soll eine hohe Energieeffizienz erreicht werden.

WO 2005/032720 A1 betrifft eine Refiner-Scheibe zum Zerkleinern von Faserstoffen, wobei die Refiner-Scheibe mehrere von einem Innenumfang zu einem Außenumfang verlaufende Stege aufweist, die durch erste Vertiefungen voneinander getrennt sind und wobei die Stege die ersten Vertiefungen miteinander verbindende zweite Vertiefungen aufweisen.

WO 2004/103567 A1 beschreibt ein Refiner-Element zum Zerfasern von Faserstoffen umfassend eine Anordnung von Stegen, die nach oben sowie zur Seite geöffnete Ausnehmungen aufweisen.

WO 00/56459 A1 beschreibt ein Refiner-Element zum Zerfasern von Faserstoffen mit einer Anordnung von Stegen in deren Oberfläche seitlich Stufen eingeformt sind.

US 2011/0155828 A1 beschreibt eine Refiner-Scheibe zum Zerfasern von Kunststoffen, wobei die Refiner-Scheiben mehrere Stege mit vorlaufenden und nachlaufenden Seitenwänden aufweist und die vorlaufende Seitenwand gezackt ausgebildet ist.

Ausgehend von dem erläuterten Stand der Technik liegt der Erfindung daher die Aufgabe zugrunde, eine Vorrichtung der eingangs genannten Art bereitzustellen, mit der die Reinigungswirkung bei hoher Energieeffizienz weiter erhöht werden kann.

Die Erfindung löst die Aufgabe durch den Gegenstand von Anspruch 1. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass die Reinigungsflächen der ersten und zweiten Reinigungsscheibe jeweils eine Mehrzahl von zwischen einer inneren und einer äußeren Radiusposition der Reinigungsflächen verlaufenden Reinigungsrippen aufweisen, wobei zwischen benachbarten Reinigungsrippen jeweils ein Freiraum gebildet ist, und wobei in die Oberfläche der Reinigungsrippen jeweils eine Vielzahl von Nuten eingebracht ist.

Wie eingangs erläutert, dient die Vorrichtung zur Reinigung von Kunststoffschnipseln. Wie ebenfalls eingangs erläutert, fallen die Kunststoffschnipsel bei der Zerkleinerung von Kunststoffabfall, beispielsweise Kunststoffverpackungen wie Getränkeflaschen oder ähnliches an. Die Kunststoffschnipsel sind vorzerkleinerte flächige Kunststoffabfälle, die in Form von Flakes (dünnwandige Hartkunststoffe, Folien etc.) oder in Form von stückigen Kunststoffen (dickwandige Hartkunststoffe) mit einer weitgehend definierten Größe vorliegen können. Wie weiterhin eingangs erläutert, können die zu entfernenden Verunreinigungen, insbesondere Oberflächenanhaftungen sein, zum Beispiel Zellstoffreste, Klebereste, Etikettenreste oder organische Verschmutzungen. Die Kunststoffschnipsel können insbesondere flächige Kunststoffteilchen sein. Insbesondere bei Kunststoff mit einer geringen Zähigkeit, beispielsweise HDPE, können zu einem gewissen Anteil auch dickere Kunststoffteilchen enthalten sein, die mit der erfindungsgemäßen Vorrichtung gereinigt werden.

Die erfindungsgemäße Vorrichtung besitzt eine erste und zweite Reinigungsscheibe. Die erste und zweite Reinigungsscheibe können jeweils eine (hohl-)zylindrische Grundform besitzen. Die einander gegenüberliegenden Reinigungsflächen können jeweils kreisringförmig sein. Die Reinigungsscheiben können übereinander angeordnet sein, so dass die Reinigungsflächen jeweils in einer horizontalen Ebene liegen. Die Rotationsachse der zumindest einen drehbar angetriebenen Reinigungsscheibe kann gleichzeitig ihre Symmetrieachse sein. Die Rotationsachse kann in vertikaler Richtung verlaufen. Der Antrieb kann ein elektrischer Antrieb sein. Wie erwähnt, ist es insbesondere möglich, dass nur eine der Reinigungsscheiben drehend angetrieben wird (Rotor), während die andere der Reinigungsscheiben nicht gedreht wird (Stator). Die Zuführeinrichtung kann die Kunststoffschnipsel zentral zwischen die Reinigungsscheiben einbringen. Sie können dann durch den Reinigungsspalt hindurch von innen nach außen gefördert werden, dabei gereinigt werden und außen aus dem Reinigungsspalt ausgebracht werden.

Die Reinigungsscheiben der erfindungsgemäßen Vorrichtung weisen Reinigungsrippen auf, die zwischen einer inneren und einer äußeren Radiusposition der Reinigungsflächen verlaufen. Zwischen benachbarten Reinigungsrippen, insbesondere zwischen ihren Scheitelflächen, ist jeweils ein Freiraum gebildet. Die Reinigungsrippen können sich sämtlich oder teilweise ausgehend von dem äußeren Rand der Reinigungsflächen bzw. Reinigungsscheiben bis zu dem inneren Rand der Reinigungsflächen bzw. Reinigungsscheiben erstrecken. Es ist jedoch auch möglich, dass die Reinigungsrippen zwar zwischen dem äußeren Rand und dem inneren Rand der Reinigungsflächen bzw. Reinigungsscheiben verlaufen, sich jedoch nicht vollständig bis zu dem inneren Rand oder bis zu dem äußeren Rand erstrecken. Die inneren und äußeren Radiuspositionen müssen also nicht notwendig identisch sein mit dem inneren oder äußeren Rand der Reinigungsflächen bzw. der Reinigungsscheiben. Sofern die Reinigungsscheiben im Bereich ihres Zentrums geschlossen sind, können die Reinigungsrippen sich bis zu dem Zentrum der Reinigungsflächen bzw. der Reinigungsscheiben erstrecken. Die Reinigungsrippen können einen geraden Verlauf besitzen oder entlang einer gekrümmten Richtung verlaufen. Sie können in radialer Richtung über die jeweilige Reinigungsfläche verlaufen. Es ist jedoch auch möglich, dass sie in einer Richtung verlaufen, die gegenüber der radialen Richtung unter einem Winkel liegt ist.

Erfindungsgemäß ist darüber hinaus in die Oberfläche der Reinigungsrippen jeweils eine Vielzahl von Nuten eingebracht. Erfindungsgemäß ist die Oberfläche der Reinigungsrippen also durch die Nuten unterbrochen. Es sind grundsätzlich unterschiedliche Querschnittsgeometrien für die Nuten möglich. Beispielsweise können die Nuten einen rechteckigen Querschnitt besitzen. Es ist aber beispielsweise auch möglich, dass die Nuten einen V-förmigen Querschnitt besitzen oder dass beispielsweise nur eine die Nuten jeweils begrenzende Flanke gegenüber der Vertikalen geneigt ist, während die andere Flanke in einer vertikalen Ebene liegt, oder dass sich die Breite der Nuten ausgehend von ihrer dem Reinigungsspalt zugewandten Öffnung zum Nutgrund hin aufweitet. Die letztgenannte Ausgestaltung verhindert, dass sich Verunreinigungen in den Nuten, insbesondere im Nutgrund, ansammeln. Die Anzahl der vorgesehenen Nuten hängt von der Geometrie der Reinigungsscheiben und dem Abstand der Nuten zueinander ab. Dieses sind Parameter, die abhängig von dem jeweiligen Anwendungsfall gewählt werden können. Es können jedoch beispielsweise mehr als 50 Nuten, insbesondere mehr als 100 Nuten, pro Reinigungsrippe vorgesehen sein.

Die Erfindung basiert auf der Erkenntnis, dass es vorteilhaft ist, gezielt eine höhere Friktion auf die Oberfläche der Kunststoffschnipsel zu applizieren. Beispielsweise durch eine erhöhte Friktion abgescherte besonders hartnäckige Verunreinigungen, wie zähelastische Hotmelt-Kleber, können quasi abgeschält werden und werden durch die Nuten unmittelbar abtransportiert, so dass diese nicht erneut auf der Oberfläche von Kunststoffschnipseln anhaften bzw. verschmieren können. Die Nuten schaben dabei Verunreinigungen von den Oberflächen der zu reinigenden Kunststoffschnipsel. Die in Form von Schlitzen in die Oberfläche der Reinigungsrippen eingebrachten Nuten führen also zu einer effizienten Entfernung selbst hartnäckigster Verschmutzungen. Der Wirkungsgrad der Friktionsleistung und damit die Energieeffizienz der gesamten Vorrichtung werden durch die Nuten erheblich erhöht. Versuche haben gezeigt, dass es bei starker Verengung des Reinigungsspaltes mit dem Zweck, die Friktionsarbeit auf der Oberfläche der Kunststoffschnipsel zu erhöhen, zu einem übermäßig hohen Energieverbrauch kommt. Der Grund dafür ist, dass durch die Verengung des Reinigungsspaltes mehr Energie aufgebracht werden muss, um Wasser zwischen den Scheiben zu pumpen, da der Stömungsquerschnitt verengt wird. Durch das erfindungsgemäße Einbringen der Nuten kann der Reinigungsspalt weiter verengt werden um die Friktionsarbeit zu erhöhen. Gleichzeitig liefern die Nuten einen zusätzlichen Strömungsquerschnitt, so dass Energie eingespart wird.

Durch geeignete Ausrichtung der Nuten kann darüber hinaus die Verweildauer der Kunststoffschnipsel in dem Reinigungsspalt verlängert werden, wodurch sich eine verbesserte Reinigungswirkung, ein höherer Wirkungsgrad und damit eine verbesserte Energiebilanz ergeben. Dies kann insbesondere erreicht werden durch eine zu der Erstreckungsrichtung der Reinigungsrippen schräge Ausrichtung der Nuten. Im Stand der Technik wird die Verweildauer der Kunststoffschnipsel in dem Reinigungsspalt unter anderem verlängert durch eine gegenüber der radialen Richtung teils unter erheblichen Winkeln verlaufende Erstreckungsrichtung der Reinigungsrippen. Allerdings führt dies zu einem erheblich erhöhten Energieaufwand, weshalb aus Energieeffizienzgründen die Neigung von Reinigungsrippen gegenüber der radialen Richtung auf einen Winkel von beispielsweise maximal 60°, vorzugsweise maximal 45°, weiter vorzugsweise maximal 30° beschränkt werden sollte. Durch die erfindungsgemäßen Nuten kann die Verweilzeit der Kunststoffschnipsel in dem Reinigungsspalt dennoch signifikant erhöht werden.

Darüber hinaus können die Reinigungsflächen durch einen einfach durchzuführenden leichten Planschliff nach Verschleiß gewartet werden, wobei die Kanten der Nuten automatisch nachgeschärft werden. Dieser Nachschliff kann grundsätzlich mehrfach durchgeführt werden. Eine Grenze besteht lediglich durch die erforderliche Höhe der Reinigungsrippen, insbesondere wenn zwischen den Reinigungsrippen Reinigungsstege angeordnet sind, die beispielsweise zum Passieren von räumlich stärker ausgedehnten Kunststoffschnipseln einen ausreichenden Abstand zur Höhe der Reinigungsrippen haben sollten.

Wie bereits erwähnt, können die Nuten jeweils schräg, also unter einem Winkel, zur Erstreckungsrichtung der Reinigungsrippen verlaufen. Dieser Winkel ist grundsätzlich in Abhängigkeit von dem jeweiligen Anwendungsfall, also der in den Reinigungsspalt eingebrachten Suspension aus Flüssigkeit und zu reinigenden Kunststoffschnipseln und der Geometrie der Reinigungsflächen, wählbar. Er kann beispielsweise zwischen -90° und minus 0°, insbesondere zwischen -60° und -30°, oder zwischen 0° und 90°, insbesondere zwischen 30° und 60° liegen. Es ist weiterhin möglich, dass die Nuten derart schräg, bzw. unter einem Winkel zur Erstreckungsrichtung der Reinigungsrippen verlaufen, dass im Zuge einer Relativdrehung der Reinigungsflächen zueinander die Strömungsrichtung von durch den Reinigungsspalt strömender Flüssigkeit durch die Nuten zumindest einer Reinigungsfläche umgekehrt wird. Sofern in diesem Zusammenhang von einem schrägen Verlauf oder einem Verlauf der Nuten unter einem Winkel relativ zu der Erstreckungsrichtung der Reinigungsrippen gesprochen wird, umfasst dies selbstverständlich auch die Möglichkeit eines gekrümmten Verlaufs der Nuten und/oder der Reinigungsrippen. In diesem Fall wird ein Winkel definiert zwischen durch den Startpunkt und den Endpunkt der betreffenden Nuten bzw. der betreffenden Reinigungsrippen verlaufenden Sekanten gebildet. Bei der vorgenannten Ausgestaltung kann hinsichtlich der Strömung der Flüssigkeit durch den Reinigungsspalt praktisch ein Umkehrschub erzeugt werden. Dadurch wird unter anderem die Verweilzeit der Kunststoffschnipsel in dem Reinigungsspalt verlängert und die Reinigungswirkung erhöht. Außerdem wird je nach Verschmutzungsgrad die Selbstreinigungswirkung der Nuten durch geeignete Wahl der Intensität der Flüssigkeitsströmung verbessert. Dabei kann es - abhängig von der Beschaffenheit der zu reinigenden Kunststoffschnipsel - vorteilhaft sein, wenn die Nutquerschnitte sich in Längsrichtung der jeweiligen Nut zu ihrem Ende erweitern. Der Nutquerschnitt kann sich in Fließrichtung der Suspension aus Flüssigkeit und zu reinigenden Kunststoffschnipseln durch die Nuten im Betrieb der Vorrichtung erweitern. Die Erweiterung kann insbesondere entgegengesetzt zur Drehrichtung der betreffenden Reinigungsscheibe vorliegen. Auf diese Weise kann verhindert werden, dass sich beispielsweise feine PET-Flakes im Nutquerschnitt verkeilen. Durch die gezielte Vergrößerung des Strömungsquerschnitts der Nuten in Fließrichtung der Wasserströmung "schwimmen" sich sonst blockierende Kunststoffteilchen frei.

Der Freiraum zwischen benachbarten Reinigungsrippen ist insbesondere zwischen den einander zugewandten Flanken der Reinigungsrippen gebildet. Der Freiraum kann beispielsweise einen V-förmigen Querschnitt besitzen. Grundsätzlich kann zwischen den Scheitelflächen benachbarter Reinigungsrippen sowohl auf der ersten Reinigungsfläche als auch auf der zweiten Reinigungsfläche jeweils ein Abstand bestehen, der im Wesentlichen der durchschnittlichen Dicke der mittels der Zuführeinrichtung zugeführten Kunststoffschnipseln entspricht. Der genannte Abstand zwischen den Scheitelflächen benachbarter Reinigungsrippen am Ort ihres geringsten Abstands kann größer sein als die Breite der Scheitelflächen der benachbarten Reinigungsrippen, beispielsweise 1,5 mal größer. Hierdurch wird ein verbesserter Abtransport der Flüssigkeit mit den Kunststoffschnipseln ohne Gefahr einer Stauung erreicht.

Die Erstreckungsrichtung der Reinigungsrippen zwischen der inneren und äußeren Radiusposition kann wie bereits erläutert unter einem Winkel zur radialen Richtung verlaufen, beispielsweise einem Winkel zwischen -60° und 60°, vorzugsweise -45° und 45°, weiter vorzugsweise -30° und 30°. Wie ebenfalls bereits erläutert, wird die Erstreckungsrichtung bzw. Haupterstreckungsrichtung der Reinigungsrippen bei einem gekrümmten Verlauf durch eine durch den Startpunkt der Reinigungsrippen, insbesondere an der inneren Radiusposition, und den Endpunkt der Reinigungsrippen, insbesondere an der äußeren Radiusposition, verlaufende Sekante vorgegeben. Wie ebenfalls eingangs erläutert, wird durch diese Ausgestaltung die Verweilzeit der Kunststoffschnipsel in dem Reinigungsspalt und damit die Reinigungswirkung erhöht. Aufgrund des mit dem Winkel erheblich ansteigenden Energieverbrauchs ist es allerdings vorteilhaft, wenn der Winkel beispielsweise nicht größer als 10° ist. Da jedoch die erfindungsgemäß vorgesehenen Nuten zu einer erheblichen Senkung des Energieverbrauchs führen, kann bei entsprechend ausgebildeten Nuten und bei einigen Kunststoffschnipseln der Winkel auch bis zu 60°, vozugsweise bis zu 45°, weiter vorzugsweise bis zu 30° betragen.

Nach einer weiteren Ausgestaltung kann vorgesehen sein, dass sich eine erste Gruppe von Reinigungsrippen ausgehend von einem äußeren Rand bis zu einem inneren Rand der jeweiligen Reinigungsfläche erstreckt, und dass sich eine zweite Gruppe von Reinigungsrippen ausgehend von dem äußeren Rand bis zu einer von dem inneren Rand der jeweiligen Reinigungsfläche beabstandeten inneren Radiusposition erstrecken, wobei die Reinigungsrippen der zweiten Gruppe jeweils zwischen benachbarten Reinigungsrippen der ersten Gruppe angeordnet sind. Es wird dadurch bei ausreichend großem Abstand zwischen den Reinigungsrippen in dem den Einlaufbereich bildenden radial inneren Bereich der Reinigungsflächen ein ausreichend geringer Abstand zwischen den Reinigungsrippen in dem radial äußeren Bereich der Reinigungsflächen gewährleistet. Dadurch wird bei effektiver Reinigung eine Stauung vermieden. Es ist natürlich auch möglich, dass andere Gruppen von Reinigungsrippen gebildet werden, beispielsweise segmentartig über die Reinigungsfläche verteilte Gruppen, wobei die Reinigungsgrippen eines Segments jeweils parallel zueinander sind, jedoch nicht-parallel zu den Reinigungsrippen eines oder mehrerer der anderen Segmente verlaufen.

Nach einer weiteren Ausgestaltung kann vorgesehen sein, dass zumindest die Reinigungsrippen und die Nuten der Reinigungsflächen der ersten und zweiten Reinigungsscheibe identisch ausgebildet sind, so dass sich die Nuten bei im Betrieb einander zugewandten Reinigungsflächen und im Zuge einer Drehung der zumindest einen Reinigungsscheibe kreuzen. Insbesondere können die beiden einander gegenüberliegenden Reinigungsflächen vollständig identisch ausgestaltet sein. Durch das Kreuzen der Nuten wird eine Scherwirkung erzeugt, die die Reinigung der Kunststoffschnipsel weiter verbessert, insbesondere bei besonders hartnäckig anhaftenden Verschmutzungen.

Zumindest eine Flanke der Reinigungsrippen ist erfindungsgemäß gegenüber der Axialrichtung der jeweiligen Reinigungsscheibe geneigt oder gekrümmt. Die Axialrichtung wird durch die Symmetrieachse bzw. Drehachse der jeweiligen Reinigungsscheibe gebildet. Die entsprechenden Flanken können also jeweils in einer ebenen oder einer gekrümmten Fläche liegen. Wie erläutert, können die Achsen der Reinigungsscheiben jeweils in vertikaler Richtung verlaufen. Es ist dabei auch möglich, dass beide Flanken der Reinigungsrippen gegenüber der Symmetrieachse der jeweiligen Reinigungsscheibe gekrümmt oder geneigt sind. Die Reinigungsrippen der ersten und/oder zweiten Reinigungsscheibe können weiterhin zumindest im Übergang zwischen ihrer mindestens einen geneigten oder gekrümmten Flanke und ihrer Scheitelfläche abgerundet sein. Außerdem können die Reinigungsrippen der ersten und/oder zweiten Reinigungsscheibe in einer Umlaufrichtung um das Zentrum der jeweiligen Reinigungsscheibe oder der jeweiligen Reinigungsfläche ein Sägezahnprofil bilden.

Die Reinigungsrippen der ersten und/oder zweiten Reinigungsscheibe besitzen eine horizontale Scheitelfläche. Die Nuten erstrecken sich erfindungsgemäß über die gesamte Scheitelfläche und zumindest abschnittsweise über die gekrümmten oder geneigten Flanken der Reinigungsrippen. Die Reinigungswirkung durch die Nuten wird dadurch weiter verbessert. Nach einer weiteren Ausgestaltung können die geneigten oder gekrümmten Flanken der Reinigungsrippen der ersten und/oder zweiten Reinigungsscheibe die bei einer Drehung der jeweiligen Reinigungsscheibe vorlaufenden Flanken sein.

Die innere Radiusposition zumindest einiger Reinigungsrippen kann durch den inneren Rand der jeweiligen Reinigungsfläche bzw. Reinigungsscheibe gebildet sein, wobei zumindest diese Reinigungsrippen ausgehend von dem inneren Rand zum äußeren Rand hin jeweils rampenartig ansteigen. Es wird somit eine flache Einlaufzone für die Flüssigkeit mit den zu reinigenden Kunststoffschnipseln gebildet, so dass eine Stauung im Einlassbereich in den Reinigungsspalt sicher verhindert werden kann.

Erfindungsgemäß sind zwischen zumindest einigen zueinander benachbarten Reinigungsrippen mehrere quer zur Erstreckungsrichtung der Reinigungsrippen verlaufende Reinigungsstege angeordnet. Die Reinigungsstege können senkrecht zur Erstreckungsrichtung der Reinigungsrippen verlaufen. Sie können aber auch in einer Richtung quer zur Erstreckungsrichtung der Reinigungsrippen verlaufen, die einen kleineren oder größeren Winkel als 90° zur Erstreckungsrichtung der Reinigungsrippen besitzt. Die Reinigungsstege der ersten und zweiten Reinigungsscheibe können so angeordnet sein, dass die Reinigungsstege der ersten und zweiten Reinigungsscheibe bei einer Drehung der mindestens einen Reinigungsscheibe nicht oder nicht dauerhaft in einander direkt gegenüberliegende Positionen gelangen. Weiterhin können die Reinigungsstege auf der ersten und zweiten Reinigungsfläche jeweils entlang mehrerer kreisförmiger Bahnen um das Zentrum der jeweiligen Reinigungsscheibe bzw. Reinigungsfläche. Die kreisförmigen Bahnen der Reinigungsstege auf der ersten Reinigungsfläche können andere Radien besitzen als die kreisförmigen Bahnen der Reinigungsstege auf der zweiten Reinigungsfläche. Weiterhin können die Reinigungsstege entlang der kreisförmigen Bahnen jeweils zwischen jedem Paar von benachbarten Reinigungsrippen angeordnet sein. Zumindest einige der kreisförmigen Bahnen auf der ersten Reinigungsfläche und der kreisförmigen Bahnen auf der zweiten Reinigungsfläche können den gleichen Radius besitzen, wobei zumindest die Reinigungsstege entlang kreisförmiger Bahnen mit gleichem Radius jeweils nur zwischen jedem zweiten Paar von benachbarten Reinigungsrippen angeordnet sind.

Die Reinigungsstege der ersten und/oder zweiten Reinigungsscheibe können in radialer Richtung der Reinigungsscheiben nach außen jeweils rampenartig ansteigen. Weiterhin ist es möglich, dass die Reinigungsstege der ersten Reinigungsscheibe eine geringere Höhe besitzen als die Reinigungsrippen der ersten Reinigungsscheibe und/oder dass die Reinigungsstege der zweiten Reinigungsscheibe eine geringere Höhe besitzen als die Reinigungsrippen der zweiten Reinigungsscheibe. Durch diese Ausgestaltung wird sichergestellt, dass auch größere Kunststoffschnipsel hindurchtreten können.

Das Vorsehen der wie oben erläutert ausgestalteten Reinigungsstege hat im Zusammenwirken mit den wie oben erläutert ausgestalteten Reinigungsrippen eine verbesserte Reinigungswirkung zur Folge. Dabei wird die mechanische Beanspruchung, insbesondere die Stauchung, der Kunststoffschnipsel reduziert. Insbesondere wird ein Falten oder Knäueln der Kunststoffschnipsel vermieden. Die mit den Verunreinigungen behafteten Oberflächen der Kunststoffschnipsel bleiben somit für die Reinigung zugänglich. Die Kunststoffschnipsel werden zwischen die Reinigungsrippen gezogen. Die Oberfläche der Reinigungsrippen erzeugt insbesondere im Zusammenwirken mit den Nuten eine hohe Friktion zur Reinigung der Kunststoffschnipsel.

Die erfindungsgemäße Vorrichtung kann weiterhin eine Flüssigkeitszuführeinrichtung aufweisen, mit der Flüssigkeit, insbesondere Wasser oder eine wässrige Lösung, in den Reinigungsspalt zuführbar ist.

Ein Ausführungsbeispiel der Erfindung wird nachfolgend anhand von Figuren näher erläutert. Es zeigen schematisch:
- Fig.1: einen Ausschnitt einer Reinigungsscheibe einer erfindungsgemäßen Vorrichtung in einer Draufsicht, und
- Fig. 2: den Ausschnitt aus Fig. 1 in einer perspektivischen Ansicht.

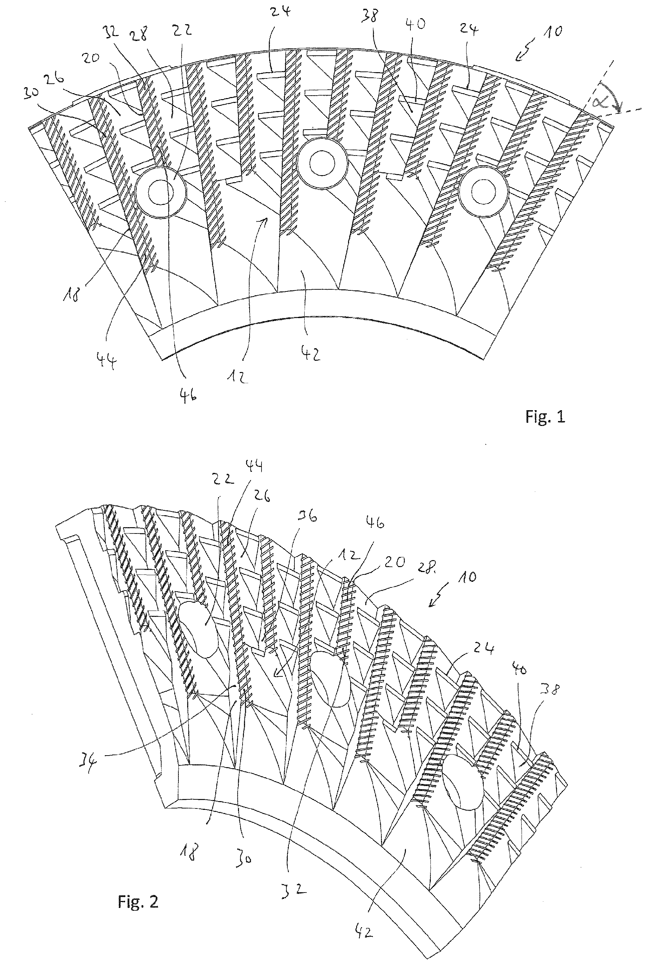

Soweit nichts anderes angegeben ist, bezeichnen in den Figuren gleiche Bezugszeichen gleiche Gegenstände. In den Figuren 1 und 2 ist ausschnittsweise eine Reinigungsscheibe 10 einer erfindungsgemäßen Vorrichtung dargestellt. Die Reinigungsscheibe 10 besitzt in dem gezeigten Beispiel eine hohlzylindrische Grundform und eine kreisringförmige Reinigungsfläche 12. Die Reinigungsscheibe 10 kann aus mehreren Reinigungsscheibensegmenten zusammengesetzt sein, wobei die Figuren 1 und 2 beispielsweise ein solches Segment zeigen können. Auf der Reinigungsfläche 12 ist eine Vielzahl von Reinigungsrippen 18, 20 angeordnet. Die Reinigungsrippen 18 bilden eine erste Gruppe von Reinigungsrippen und erstrecken sich jeweils vollständig zwischen dem inneren Rand und dem äußeren Rand der Reinigungsfläche 12. Die Reinigungsrippen 20 bilden eine zweite Gruppe von Reinigungsrippen, die sich ausgehend von dem äußeren Rand der Reinigungsfläche 12 bis zu einer inneren Radiusposition erstrecken, die beispielsweise mittig zwischen dem inneren und dem äußeren Rand liegt. Bei dem Bezugszeichen 22 sind Öffnungen gezeigt, die zur Befestigung der Reinigungsscheibe 10 an einer Trägerplatte oder ähnlichem dienen. Die Reinigungsrippen 18, 20 verlaufen im dargestellten Beispiel unter einem Winkel von beispielsweise maximal 30° zur radialen Richtung.

In dem dargestellten Beispiel sind weiterhin zwischen sämtlichen zueinander benachbarten Reinigungsrippen 18, 20 jeweils mehrere sich quer zur Erstreckungsrichtung der Reinigungsrippen 18, 20 erstreckende Reinigungsstege 24 angeordnet. Wie in den Figuren 1 und 2 zu erkennen, sind die Reinigungsstege 22 in zwischen den Reinigungsrippen 18, 20 gebildeten Freiräumen angeordnet. Wie weiter in den Figuren 1 und 2 zu erkennen, sind die Reinigungsstege 24 benachbarter Freiräume jeweils in Radialrichtung versetzt zueinander angeordnet. Auf diese Weise werden wiederum zwei Gruppen von Reinigungsstegen 24 gebildet, die jeweils entlang mehrerer konzentrischer kreisförmiger Bahnen um das Zentrum der Reinigungsscheibe 10 verlaufen. Die Reinigungsrippen 18, 20 besitzen weiterhin eine gegenüber der Rotationsachse der Reinigungsscheibe 10, die in Fig. 1 senkrecht in die Zeichenebene hinein verläuft, geneigte erste Flanke 26, 28. Diese ersten Flanken 26, 28 münden an ihrer einen Seite in eine horizontale Scheitelfläche 30, 32 der Reinigungsrippen 18, 20. Die horizontalen Scheitelflächen 30, 32 münden wiederum in eine zweite Flanke 34, 36 der Reinigungsrippen 18, 20 (siehe Fig. 2). Die zweiten Flanken 34, 36 liegen in einer vertikalen Ebene, sind also gegenüber der Rotationsachse der Reinigungsscheibe 10 nicht geneigt. Außerdem ist in den Figuren zu erkennen, dass die Reinigungsstege 24 jeweils eine in radialer Richtung rampenartig ansteigende Fläche 38 besitzen, die in eine horizontale Scheitelfläche 40 der Reinigungsstege 24 mündet. Die der Fläche 38 gegenüberliegende Fläche der Reinigungsstege 24 ist wiederum in einer vertikalen Ebene angeordnet. Schließlich ist beispielsweise in Fig. 2 zu erkennen, dass die Höhe der Reinigungsstege 24, insbesondere ihrer Scheitelflächen 40, geringer ist als die Höhe der Reinigungsrippen 18, 20, insbesondere ihrer Scheitelflächen 30, 32. Darüber hinaus besitzen die Reinigungsrippen 18 der ersten Gruppe an dem inneren Rand der Reinigungsscheibe 10 einen in radialer Richtung der Reinigungsscheibe 10 bzw. der Reinigungsfläche 12 jeweils rampenartig ansteigenden Abschnitt 42.

In den Figuren 1 und 2 ist außerdem zu erkennen, dass in die Oberfläche der Reinigungsrippen 18, 20 jeweils eine Vielzahl von schlitzartigen Nuten 44, 46 eingebracht ist. Die Nuten 44, 46 sind gleichmäßig beabstandet zueinander angeordnet und erstrecken sich jeweils vollständig über die Scheitelflächen 30, 32 und abschnittsweise in die Flanken 26, 28 der Reinigungsrippen 18, 20. Wie darüber hinaus in den Figuren zu erkennen, verlaufen die Nuten 44, 46 jeweils unter einem Winkel α zur Erstreckungsrichtung der Reinigungsrippen 18, 20, gebildet insbesondere durch die Längsachse der Scheitelflächen 30, 32 der Reinigungsrippen 18, 20. Dieser Winkel α kann beispielsweise 45° betragen. Abhängig von dem Einsatzfeld sind selbstverständlich auch andere Winkel möglich. Darüber hinaus ist es auch möglich, dass die Reinigungsrippen der ersten und/oder zweiten Gruppe 18, 20 und/oder die Nuten 44, 46 teilweise oder sämtlich einen gekrümmten Verlauf besitzen. In diesem Fall beziehen sich etwaige Winkelangaben auf eine durch den Startpunkt und den Endpunkt gelegte Sekante.

Obgleich in den Figuren 1 und 2 nur eine Reinigungsscheibe 10 ausschnittsweise dargestellt ist, weist die Vorrichtung selbstverständlich eine zweite Reinigungsscheibe auf, die insbesondere eine identisch ausgebildete Reinigungsfläche mit Reinigungsrippen 18, 20, Reinigungsstegen 24 sowie Nuten 44, 46 wie oben erläutert besitzen kann. Im Betrieb werden die Reinigungsscheiben derart übereinander angeordnet, dass sich die Reinigungsflächen gegenüberliegen und zwischen sich einen Reinigungsspalt bilden. Mittels eines nicht näher dargestellten Antriebs wird mindestens eine der Reinigungsscheiben drehend angetrieben, wobei sich insbesondere bei identischer Ausgestaltung der Reinigungsflächen der Reinigungsscheiben die Nuten 44, 46 im Zuge der Drehung kreuzen und zu einer die Reinigung verbessernden Scherwirkung führen. Außerdem kommt es durch die schräge Anordnung der Nuten 44, 46 zumindest im Bereich einer der Reinigungsscheiben zu einer Umkehrung der durch den Reinigungsspalt geleiteten Suspension aus Flüssigkeit und zu reinigenden Kunststoffschnipseln. Es versteht sich, dass die Vorrichtung hierzu eine nicht näher dargestellte Zuführeinrichtung für die Kunststoffschnipsel und eine ebenfalls nicht näher dargestellte Flüssigkeitszuführeinrichtung für die Flüssigkeit aufweist.

## Patentansprüche

1. Vorrichtung zum Entfernen von Verunreinigungen auf Kunststoffschnipseln, umfassend eine erste Reinigungsscheibe (10) mit einer ersten Reinigungsfläche (12) und eine zweite Reinigungsscheibe (10) mit einer zweiten Reinigungsfläche (12), wobei die Reinigungsflächen (12) einander gegenüberliegen und zwischen sich einen Reinigungsspalt begrenzen, weiter umfassend eine Antriebseinrichtung, mit der zumindest eine der Reinigungsscheiben (10) um ihre Rotationsachse drehbar ist und eine Zuführeinrichtung, mit der Kunststoffschnipsel zwischen die Reinigungsscheiben (10) zuführbar sind, wobei die Reinigungsflächen (12) der ersten und zweiten Reinigungsscheibe (10) jeweils eine Mehrzahl von zwischen einer inneren und einer äußeren Radiusposition der Reinigungsflächen (12) verlaufenden Reinigungsrippen (18, 20) aufweisen, wobei zwischen benachbarten Reinigungsrippen (18, 20) jeweils ein Freiraum gebildet ist, und wobei in die Oberfläche der Reinigungsrippen (18, 20) jeweils eine Vielzahl von Nuten (44, 46) eingebracht ist, wobei zumindest eine Flanke (26, 28) der Reinigungsrippen (18, 20) gegenüber der Axialrichtung der jeweiligen Reinigungsscheibe (10) geneigt oder gekrümmt ist und wobei die Reinigungsrippen (18, 20) der ersten und/oder zweiten Reinigungsscheibe (10) eine horizontale Scheitelfläche (30, 32) besitzen, wobei sich die Nuten (44, 46) über die gesamte Scheitelfläche (30, 32) und zumindest abschnittsweise über die gekrümmten oder geneigten Flanken (26, 28) der Reinigungsrippen (18, 20) erstrecken, wobei zwischen zumindest einigen zueinander benachbarten Reinigungsrippen (18, 20) mehrere quer zur Erstreckungsrichtung der Reinigungsrippen (18, 20) verlaufende Reinigungsstege (24) angeordnet sind.

2. Vorrichtung nach Anspruch 1, **dadurch gekennzeichnet, dass** die Nuten (44, 46) jeweils unter einem Winkel (α) zur Erstreckungsrichtung der Reinigungsrippen (18, 20) verlaufen.

3. Vorrichtung nach Anspruch 2, **dadurch gekennzeichnet, dass** der Winkel (α) zwischen -90° und 0°, insbesondere zwischen -60° und -30°, oder zwischen 0° und 90°, insbesondere zwischen 30° und 60° beträgt.

4. Vorrichtung nach einem der Ansprüche 2 oder 3, **dadurch gekennzeichnet, dass** die Nuten (44, 46) derart unter einem Winkel zur Erstreckungsrichtung der Reinigungsrippen (18, 20) verlaufen, dass im Zuge einer Relativdrehung der Reinigungsflächen (12) zueinander die Strömungsrichtung von durch den Reinigungsspalt strömender Flüssigkeit durch die Nuten (44, 46) zumindest einer Reinigungsfläche (12) umgekehrt wird.

5. Vorrichtung nach einem der vorhergehenden Ansprüche, **dadurch gekennzeichnet, dass** die Erstreckungsrichtung der Reinigungsrippen (18, 20) zwischen der inneren und der äußeren Radiusposition unter einem Winkel zwischen -60° und 60°, vorzugsweise -45° und 45°, weiter vorzugsweise -30° und 30°, zur Radialenrichtung verläuft.

6. Vorrichtung nach einem der vorhergehenden Ansprüche, **dadurch gekennzeichnet, dass** der Abstand zwischen den Scheitelflächen benachbarter Reinigungsrippen (18, 20) am Ort ihres geringsten Abstands größer ist als die Breite der Scheitelflächen der benachbarten Reinigungsrippen (18, 20).

7. Vorrichtung nach einem der vorhergehenden Ansprüche, **dadurch gekennzeichnet, dass** sich eine erste Gruppe von Reinigungsrippen (18, 20) ausgehend von einem äußeren Rand bis zu einem inneren Rand der jeweiligen Reinigungsfläche (12) erstreckt, und dass sich eine zweite Gruppe von Reinigungsrippen (18, 20) ausgehend von dem äußeren Rand bis zu einer von dem inneren Rand der jeweiligen Reinigungsfläche (12) beabstandeten Radiusposition erstrecken, wobei die Reinigungsrippen (18, 20) der zweiten Gruppe jeweils zwischen benachbarten Reinigungsrippen (18, 20) der ersten Gruppe angeordnet sind.

8. Vorrichtung nach einem der vorhergehenden Ansprüche, **dadurch gekennzeichnet, dass** zumindest die Reinigungsrippen (18, 20) und die Nuten (44, 46) der Reinigungsflächen (12) der ersten und zweiten Reinigungsscheibe (10) identisch ausgebildet sind, so dass sich die Nuten (44, 46) bei im Betrieb einander zugewandten Reinigungsflächen (12) und im Zuge einer Drehung der zumindest einen Reinigungsscheibe (10) kreuzen.

9. Vorrichtung nach einem der vorhergehenden Ansprüche, **dadurch gekennzeichnet, dass** die geneigten oder gekrümmten Flanken (26, 28) der Reinigungsrippen (18, 20) der ersten und/oder zweiten Reinigungsscheibe (10) die bei einer Drehung der jeweiligen Reinigungsscheibe (10) vorlaufenden Flanken (26, 28) sind.

10. Vorrichtung nach einem der vorhergehenden Ansprüche, **dadurch gekennzeichnet, dass** die innere Radiusposition zumindest einiger Reinigungsrippen (18, 20) durch den inneren Rand der jeweiligen Reinigungsfläche (12) gebildet ist, wobei zumindest diese Reinigungsrippen (18, 20) ausgehend von dem inneren Rand jeweils rampenartig ansteigen.

11. Vorrichtung nach einem der vorhergehenden Ansprüche, **dadurch gekennzeichnet, dass** die Reinigungsstege (24) der ersten und/oder zweiten Reinigungsscheibe (10) in radialer Richtung der Reinigungsscheiben (10) jeweils rampenartig ansteigen.

12. Vorrichtung nach einem der vorhergehenden Ansprüche, **dadurch gekennzeichnet, dass** die Reinigungsstege (24) der ersten Reinigungsscheibe (10) eine geringere Höhe besitzen als die Reinigungsrippen (18, 20) der ersten Reinigungsscheibe (10) und/oder dass die Reinigungsstege (24) der zweiten Reinigungsscheibe (10) eine geringere Höhe besitzen als die Reinigungsrippen (18, 20) der zweiten Reinigungsscheibe (10).

13. Vorrichtung nach einem der vorhergehenden Ansprüche, **dadurch gekennzeichnet, dass** sie weiterhin eine Flüssigkeitszuführeinrichtung aufweist, mit der Flüssigkeit, insbesondere Wasser oder eine wässrige Lösung, in den Reinigungsspalt zuführbar ist.

## Claims

1. An apparatus for removing impurities from shreds of plastic comprising a first cleaning disk (10) with a first cleaning surface (12), and a second cleaning disk (10) with a second cleaning surface (12), wherein the cleaning surfaces (12) are opposite each other and delimit a cleaning gap between them, further comprising a drive apparatus by means of which at least one of the cleaning disks (10) can rotate about its rotational axis, and a feed apparatus by means of which the shreds of plastic can be fed between the cleaning disks (10), wherein the cleaning surfaces (12) of the first and second cleaning disk (10) each have a plurality of cleaning ribs (18, 20) running between an inner and an outer radial position of the cleaning surfaces (12), wherein a gap is formed between respective adjacent cleaning ribs (18, 20), and wherein a plurality of grooves (44, 46) is introduced into the surface of each of the cleaning ribs (18, 20), wherein at least one flank (26, 28) of the cleaning ribs (18, 20) is angled or curved relative to the axial direction of the respective cleaning disk (10), and wherein the cleaning ribs (18, 20) of the first and/or second cleaning disk (10) possess a horizontal peak surface (30, 32), wherein the grooves (44, 46) extend over the entire peak surface (30, 32), and at least sectionally over the curved or angled flanks (26, 28) of the cleaning ribs (18, 20), wherein a plurality of cleaning bars (24) running transversally to the direction of extension of the cleaning ribs (18, 20) are arranged between at least some cleaning ribs (18, 20) adjacent to each other.

2. The apparatus according to claim 1, **characterized in that** the grooves (44, 46) each run at an angle (α) relative to the direction of extension of the cleaning ribs (18, 20).

3. The apparatus according to claim 2, **characterized in that** the angle (α) is between -90° and 0°, in particular between -60° and -30°, or between 0° and 90°, in particular between 30° and 60°.

4. The apparatus according to one of claims 2 or 3, **characterized in that** the grooves (44, 46) run at an angle relative to the direction of extension of the cleaning ribs (18, 20) so that when the cleaning surfaces (12) rotate relative to each other, the direction of flow of liquid flowing through the cleaning gap is reversed by the grooves (44, 46) of at least one cleaning surface (12).

5. The apparatus according to one of the preceding claims, **characterized in that** the direction of extension of the cleaning ribs (18, 20) between the inner and outer radial position run at an angle relative to the radial direction between -60° and 60°, preferably -45° and 45°, more preferably -30° and 30°.

6. The apparatus according to one of the preceding claims, **characterized in that** the distance between the peak surfaces of adjacent cleaning ribs (18, 20) at the location of their narrowest distance is larger than the width of the peak surfaces of the adjacent cleaning ribs (18, 20).

7. The apparatus according to one of the preceding claims, **characterized in that** a first group of cleaning ribs (18, 20) extends from an outer edge up to an inner edge of the respective cleaning surface (12), and a second group of cleaning ribs (18, 20) extends from the outer edge up to a radial position at a distance from the inner edge of the respective cleaning surface (12), wherein the cleaning ribs (18, 20) of the second group are respectively arranged between the adjacent cleaning ribs (18, 20) of the first group.

8. The apparatus according to one of the preceding claims, **characterized in that** at least the cleaning ribs (18, 20) and the grooves (44, 46) of the cleaning surfaces (12) of the first and second cleaning disk (10) are designed identically so that the grooves (44, 46) cross each other when cleaning surfaces (12) face each other during operation, and while at least one cleaning disk (10) is rotating.

9. The apparatus according to one of the preceding claims, **characterized in that** the angled or curved flanks (26, 28) of the cleaning ribs (18, 20) of the first and/or second cleaning disk (10) are the leading flanks (26, 28) during a rotation of the respective cleaning disk (10).

10. The apparatus according to one of the preceding claims, **characterized in that** the inner radial position of at least some cleaning ribs (18, 20) is formed by the inner edge of the respective cleaning surface (12), wherein at least these cleaning ribs (18, 20) rise respectively in a ramp-like manner starting from the inner edge.

11. The apparatus according to one of the preceding claims, **characterized in that** the cleaning bars (24) of the first and/or second cleaning disk (10) rise respectively in a ramp-like manner in the radial direction of the cleaning disks (10).

12. The apparatus according to one of the preceding claims, **characterized in that** the cleaning bars (24) of the first cleaning disk (10) possess a lower height than the cleaning ribs (18, 20) of the first cleaning disk (10), and/or the cleaning bars (24) of the second cleaning disk (10) possess a lower height than the cleaning ribs (18, 20) of the second cleaning disk (10).

13. The apparatus according to one of the preceding claims, **characterized in that** it furthermore has a liquid feed device by means of which liquid, in particular water or an aqueous solution, can be fed into the cleaning gap.

## Revendications

1. Dispositif d'élimination de matières indésirables sur les rognures de matériau synthétique, comprenant un premier disque de nettoyage (10) avec une première surface de nettoyage (12) et un second disque de nettoyage (10) avec une seconde surface de nettoyage (12), dans lequel les surfaces de nettoyage (12) se font face l'une l'autre et délimitent un interstice de nettoyage, comprenant encore un moyen d'entraînement, avec lequel au moins l'un des disques de nettoyage (10) peut pivoter autour de son axe de rotation et un moyen d'amenée, avec lequel des rognures de matériau synthétique peuvent être amenées entre les disques de nettoyage (10), dans lequel les surfaces de nettoyage (12) du premier et du second disque de nettoyage (10) présentent chacune de multiples nervures de nettoyage (18, 20) déployées entre une position radiale intérieure et extérieure des surfaces de nettoyage (12), dans lequel un espace libre est formé respectivement entre les nervures de nettoyage (18, 20) adjacentes, et dans lequel de multiples rainures (44, 46) sont réalisées respectivement dans la surface des nervures de nettoyage (18, 20), dans lequel au moins un flanc (26, 28) des nervures de nettoyage (18, 20) est incliné ou incurvé par rapport à la direction axiale du disque de nettoyage (10) respectif, et dans lequel les nervures de nettoyage (18, 20) du premier et/ou du second disque de nettoyage (10) possèdent une surface de crête (30, 32) horizontale, dans lequel les rainures (44, 46) s'étendent sur toute la surface de crête (30, 32) et au moins par endroits sur les flancs (26, 28) inclinés ou incurvés des nervures de nettoyage (18, 20), dans lequel plusieurs entretoises de nettoyage (24) déployées transversalement par rapport à la direction d'extension des nervures de nettoyage (18, 20) sont disposées entre au moins quelques nervures de nettoyage (18, 20) adjacentes les unes aux autres.

2. Dispositif selon la revendication 1, **caractérisé en ce que** les rainures (44, 46) cheminent respectivement sous un angle (α) par rapport à la direction d'extension des nervures de nettoyage (18, 20).

3. Dispositif selon la revendication 2, **caractérisé en ce que** l'angle (α) se situe entre -90° et 0°, notamment entre -60° et -30°, ou entre 0° et 90°, notamment entre 30° et 60°.

4. Dispositif selon l'une des revendications 2 ou 3, **caractérisé en ce que** les rainures (44, 46) cheminent sous un angle tel par rapport à la direction d'extension des nervures de nettoyage (18, 20) que le sens d'écoulement d'un liquide circulant à travers l'interstice de nettoyage est inversé par les rainures (44, 46) d'au moins une surface de nettoyage (12) au cours d'une rotation relative des surfaces de nettoyage (12) l'une par rapport à l'autre.

5. Dispositif selon l'une des revendications précédentes, **caractérisé en ce que** la direction d'extension des nervures de nettoyage (18, 20) entre la position radiale intérieure et extérieure évolue selon un angle se situant entre -60° et 60°, de préférence -45° et 45°, de préférence encore -30° et 30° par rapport à la direction radiale.

6. Dispositif selon l'une des revendications précédentes, **caractérisé en ce que** la distance entre les surfaces de crête de nervures de nettoyage (18, 20) adjacentes à l'endroit de leur écartement le plus faible est plus grande que la largeur des surfaces de crête des nervures de nettoyage (18, 20) adjacentes.

7. Dispositif selon l'une des revendications précédentes, **caractérisé en ce qu'**un premier groupe de nervures de nettoyage (18, 20) s'étend en partant d'un bord extérieur jusqu'à un bord intérieur de la surface de nettoyage respective (12), et qu'un second groupe de nervures de nettoyage (18, 20) s'étend en partant du bord extérieur jusqu'à une position radiale espacée par le bord intérieur de la surface de nettoyage respective (12), dans lequel les nervures de nettoyage (18, 20) du second groupe sont disposées respectivement entre les nervures de nettoyage (18, 20) adjacentes du premier groupe.

8. Dispositif selon l'une des revendications précédentes, **caractérisé en ce qu'**au moins les nervures de nettoyage (18, 20) et les rainures (44, 46) des surfaces de nettoyage (12) du premier et du second disque de nettoyage (10) sont conçues de manière identique, si bien que les rainures (44, 46) se croisent dans le cas de surfaces de nettoyage (12) se faisant face en service et au cours d'une rotation de l'un au moins des disques de nettoyage (10).

9. Dispositif selon l'une des revendications précédentes, **caractérisé en ce que** les flancs (26, 28) inclinés ou incurvés des nervures de nettoyage (18, 20) du premier et/ou du second disque de nettoyage (10) sont les flancs (26, 28) antérieurs lors d'une rotation du disque de nettoyage (10) respectif.

10. Dispositif selon l'une des revendications précédentes, **caractérisé en ce que** la position radiale intérieure d'au moins quelques nervures de nettoyage (18, 20) est formée par le bord intérieur de la surface de nettoyage respective (12), dans lequel au moins ces nervures de nettoyage (18, 20) progressent respectivement à la façon d'une rampe en partant du bord intérieur.

11. Dispositif selon l'une des revendications précédentes, **caractérisé en ce que** les entretoises de nettoyage (24) du premier et/ou du second disque de nettoyage (10) progressent respectivement à la façon d'une rampe dans le sens radial des disques de nettoyage (10).

12. Dispositif selon l'une des revendications précédentes, **caractérisé en ce que** les entretoises de nettoyage (24) du premier disque de nettoyage (10) possèdent une hauteur inférieure à celle des nervures de nettoyage (18, 20) du premier disque de nettoyage (10) et/ou les entretoises de nettoyage (24) du second disque de nettoyage (10) possèdent une hauteur inférieure à celle des nervures de nettoyage (18, 20) du second disque de nettoyage (10).

13. Dispositif selon l'une des revendications précédentes, **caractérisé en ce qu'**elle présente encore un moyen d'amenée de liquide, avec lequel du liquide, en particulier de l'eau ou une solution aqueuse, peut être amené dans l'interstice de nettoyage.
